# FASCICULE DE BREVET EUROPEEN

(11) **EP 2 106 943 B1**
(45) Date de publication et mention de la délivrance du brevet: **02.02.2011**
(21) Numéro de dépôt: 09290229.5
(22) Date de dépôt: 30.03.2009
(51) Int. Cl.: B60H 1/00

(54) **Conduite pourvue d'un dispositif réducteur de bruit pour circuit de climatisation de véhicule automobile, et circuit l'incorporant**
Leitung mit einer Kraftfahrzeugklimaanlagekühlkreisgeräuschdämmungsvorrichtung, und Kühlkreis umfassend einer solchen Leitung
Fluid line with a noise reducing apparatus for a vehicle air conditioning circuit, and circuit incorporating such a fluid line

(30) Priorité: 31.03.2008 FR 0801777
(43) Date de publication de la demande: 07.10.2009
(73) Titulaire: Hutchinson, 75008 Paris (FR)
(72) Inventeur: Auclair, Alexandre, 45210 Ferrieres en Gâtinais (FR)
(74) Mandataire: Bolinches, Michel Jean-Marie

(56) Documents cités:
- EP-A- 1 864 838
- JP-A- 53 121 340
- US-A- 6 155 378

## Description

La présente invention concerne une conduite pour fluide frigorigène gazeux ou supercritique et sous pression d'un circuit de climatisation pour véhicule automobile, cette conduite étant pourvue dans son espace interne d'un dispositif réducteur de bruit, et un tel circuit de climatisation incorporant cette conduite.

D'une manière générale, un dispositif réducteur de bruit pour circuit de climatisation d'un véhicule automobile est formé d'une capacité acoustique qui est montée en ligne dans une canalisation de ce circuit entre un compresseur et un évaporateur, de sorte à atténuer la transmission des ondes sonores générées principalement par le compresseur et se propageant dans le fluide frigorigène à l'intérieur de la conduite, via un élargissement brusque de la section de passage du fluide pénétrant dans cette capacité. En effet, cet élargissement de la section de passage à l'entrée dans la capacité se traduit de manière connue par la création d'une onde sonore en opposition de phase s'additionnant à l'onde perturbatrice pour générer une onde atténuée d'amplitude plus réduite.

Une telle capacité acoustique est usuellement située à un emplacement de la canalisation du circuit de climatisation qui est relativement éloigné du compresseur, essentiellement à cause du volume qu'occupe cette capacité et de la place qui fait souvent défaut dans le groupe motopropulseur du véhicule automobile comprenant ce compresseur, pour installer la capacité à proximité immédiate de ce dernier et, dans les cas où cette installation de la capacité à proximité immédiate du compresseur serait néanmoins envisageable, à cause des vibrations mécaniques indésirables qui sont générées par la présence de la masse additionnelle formée par cette capacité et qui peuvent être une source de rupture de la canalisation correspondante.

Cet éloignement relatif de la capacité acoustique vis-à-vis du compresseur a notamment pour effet de générer une zone de résonance entre ces deux éléments, dans laquelle le bruit peut s'autoalimenter. Il en résulte que l'atténuation du bruit dans la canalisation du circuit de climatisation est encore perfectible.

Ces capacités acoustiques permettent ainsi d'atténuer dans une certaine mesure le bruit généré par le compresseur et se propageant dans la canalisation du circuit de climatisation. Cependant, elles présentent en même temps l'inconvénient de générer des pertes de charge significatives pour le fluide les traversant, du fait de la modification brusque de la section de passage qui les caractérise. En outre, elles présentent un coût de fabrication et d'implantation sur la canalisation du circuit de climatisation qui est relativement élevé.

Le document EP-A-1 864 838 au nom de la Demanderesse, qui est considéré comme l'art antérieur le plus proche, présente dans ce contexte une conduite pour fluide frigorigène d'un tel circuit de climatisation selon le préambule de la revendication 1 annexée, qui permet de remédier à cet inconvénient tout en procurant une atténuation acoustique satisfaisante dans ce circuit. Cette conduite est pourvue dans son espace interne d'un dispositif réducteur de bruit dont la face radialement externe épouse la paroi de la conduite et qui présente deux extrémités d'entrée et de sortie formant au moins un canal axial de passage du fluide dans le dispositif.

Un but de la présente invention est de proposer une conduite ou embout tubulaire pour fluide frigorigène gazeux ou supercritique et sous pression d'un circuit de climatisation pour véhicule automobile, la conduite étant pourvue d'un nouveau dispositif réducteur de bruit monté au contact de cette conduite dans son espace radialement interne, qui présente une performance acoustique améliorée notamment dans le domaine des hautes fréquences, ce dispositif définissant un canal ou plusieurs canaux sensiblement parallèles de passage du fluide dans la direction de l'axe de la conduite et présentant une extrémité amont (i.e. d'entrée pour le fluide) convergeant vers un tronçon intermédiaire sensiblement cylindrique ou prismatique du dispositif, lequel tronçon intermédiaire est relié à une extrémité aval (i.e. de sortie pour le fluide) de ce dispositif par un tronçon aval divergent.

A cet effet, une conduite selon l'invention est telle que ce dispositif délimite avec la conduite, axialement entre ces extrémités, au moins un volume mort annulaire qui ne communique pas avec le ou chaque canal par l'une au moins desdites extrémités amont ou aval.

En d'autres termes, ce volume mort ne communique pas avec ce canal :
- par l'extrémité amont du dispositif, ou
- par l'extrémité aval de ce dispositif, ou encore
- ni par cette extrémité amont, ni par cette extrémité aval.

On notera que ce volume mort annulaire caractérisant l'agencement du dispositif selon l'invention à l'intérieur de la conduite, volume qui par définition ne contribue pas au débit circulant de fluide frigorigène hors de la conduite (i.e. en plus du fluide frigorigène entrant dans la conduite par l'extrémité amont du dispositif et en sortie par son extrémité aval), a essentiellement pour effet de restreindre la section de passage du fluide dans cette conduite, ce qui permet d'améliorer l'atténuation acoustique dans les hautes fréquences.

On notera également que les tronçons respectivement convergents et divergents (vus dans le sens de l'écoulement du fluide) qui sont formés de part et d'autre du tronçon intermédiaire globalement cylindrique du dispositif permettent de réduire les pertes de charges lors de l'écoulement du fluide dans la conduite. Par « convergent » et « divergent », on entend respectivement dans la présente description tout rétrécissement et élargissement de section de passage conférant au tronçon considéré une géométrie par exemple tronconique ou évasée (e.g. sensiblement en forme d'hyperboloïde de révolution).

On notera en outre que ledit tronçon intermédiaire du dispositif selon l'invention peut présenter une section transversale de géométrie régulière ou non dans la direction axiale (e.g. de type polygonale, épicycloïdale, elliptique ou circulaire).

Selon une autre caractéristique préférentielle de l'invention, le dispositif réducteur de bruit est monté de manière étanche contre la conduite au moins en ladite extrémité aval ou amont, qui est de préférence formée d'une collerette prolongeant dans la direction radiale ledit tronçon aval ou bien constituant ladite extrémité amont, respectivement, en étant destinée à appuyer contre un renflement d'extrémité aval (respectivement amont) de la conduite.

On notera que cette extrémité aval (respectivement amont) du dispositif selon l'invention, qui vient fermer ledit volume mort en le confinant à l'intérieur de la conduite, pourrait en variante ne pas former une telle collerette ou embase transversale pour l'extrémité de sortie (respectivement d'entrée) de la conduite, mais être constituée d'un bord légèrement évasé vers l'extérieur qui prolonge ledit tronçon divergent en étant monté de manière étanche sous la face radialement interne de cette extrémité aval (respectivement amont) de conduite.

Selon un premier mode de réalisation de l'invention, lesdites extrémités amont et aval du dispositif sont montées toutes deux de manière étanche contre la conduite, de telle sorte que ledit volume mort annulaire puisse alors s'étendre de ladite extrémité amont à ladite extrémité aval en ne communiquant pas avec ledit canal.

Dans ce cas, ce volume mort annulaire est conçu pour ne pas recevoir le fluide frigorigène, mais uniquement pour former la restriction précitée pour la section de passage du fluide dans le dispositif.

Selon un second mode de réalisation de l'invention, une seule desdites extrémités amont et aval du dispositif, ou extrémité communicante, forme au contraire avec la conduite au moins une zone d'admission pour le fluide qui est localisée radialement entre cette extrémité communicante et la paroi tubulaire de la conduite et qui communique avec ledit volume mort annulaire.

Dans ce cas, ce volume mort annulaire est bien destiné à recevoir le fluide frigorigène par l'extrémité communicante du dispositif, mais en s'opposant à sa circulation hors de la conduite du fait du confinement du fluide dans ce volume par l'autre extrémité (non communicante) du dispositif.

Conformément à ce second mode de l'invention, ladite zone d'admission pour le fluide peut être constituée d'un espace périphérique continu qui est ménagé entre ladite extrémité communicante et la paroi en regard de la conduite (e.g. un espace annulaire, dans le cas d'une paroi de conduite circulaire).

En variante, ladite extrémité communicante peut avantageusement former avec la conduite une pluralité de zones d'admission pour le fluide, qui sont ménagées de façon discontinue de part et d'autre de protubérances radiales de l'extrémité communicante qui appuient contre la conduite, cette extrémité communicante étant sensiblement en forme de roue dentée dont les dents sont formées par ces protubérances.

Selon cette variante, ladite extrémité communicante est avantageusement constituée d'un anneau interne rigide, de préférence réalisé en un matériau thermoplastique tel qu'un polyamide 6.6, autour duquel est rapporté un anneau externe souple qui forme lesdites zones d'admission entre lesdites protubérances et qui est de préférence réalisé en un caoutchouc ou en un vulcanisat thermoplastique (TPV).

En fonction de la section de passage pour le fluide frigorigène qui est ménagée entre ladite extrémité communicante du dispositif et la conduite l'entourant, on notera que ce dispositif peut fonctionner :
- comme un résonateur de Helmholtz lorsque la ou les zones d'admission entre cette extrémité communicante et la conduite procurent une section de passage inférieure à une valeur minimale donnée, ou
- comme un résonateur de type un quart d'onde lorsque la ou les zones d'admission entre cette extrémité communicante et la conduite procurent une section de passage supérieure ou égale à cette valeur seuil.

Selon un exemple particulièrement avantageux de réalisation de l'invention qui peut être optionnellement combiné à l'un ou à l'autre des premier et second modes précités de l'invention (i.e. que l'une ou qu'aucune desdites extrémités amont et aval du dispositif soit communicante), le dispositif réducteur de bruit peut présenter en outre, formée de manière traversante sur la paroi dudit tronçon intermédiaire et/ou dudit tronçon aval divergent, au moins une série de perforations qui sont agencées sur le pourtour de ce tronçon et qui sont destinées à communiquer avec ledit volume mort annulaire, de telle sorte que ce dispositif forme un résonateur de Helmholtz atténuant en particulier les hautes fréquences susmentionnées.

Par « perforations », on entend notamment dans cet exemple de réalisation des trous traversants de géométrie circulaire, oblongue ou autre, ou bien des fentes ou lumières traversantes.

De préférence, le dispositif présente une série de perforations régulièrement espacées sur une circonférence sensiblement médiane du seul tronçon intermédiaire.

On notera que ces perforations permettent une communication du fluide vers ledit volume mort annulaire qui se traduit avantageusement par un phénomène de résonance pour ces hautes fréquences de type résonateur de Helmholtz.

Avantageusement, ladite extrémité amont peut converger vers ledit tronçon intermédiaire via un court tronçon amont convergent qui est convexe sur sa face radialement interne (i.e. qui présente une concavité évasée sur sa face radialement externe).

Egalement avantageusement, ledit tronçon aval divergent peut présenter une géométrie sensiblement tronconique et une longueur axiale qui est de préférence supérieure à celle dudit tronçon intermédiaire, étant précisé que le dispositif selon l'invention peut présenter une longueur axiale comprise entre 25 mm et 150 mm.

Selon une autre caractéristique de l'invention, le dispositif réducteur de bruit présente de préférence une paroi plus fine que celle de la conduite dans laquelle il est monté et qui est par exemple de l'ordre de 1 mm.

Avantageusement, ce dispositif peut être entièrement réalisé en un matériau rigide, tel qu'un métal auquel cas l'épaisseur de sa paroi est de l'ordre de 0,1 mm, ou tel qu'une matière plastique par exemple du polyamide 6.6 auquel cas l'épaisseur de sa paroi est de l'ordre de 1 mm.

En variante, ce dispositif peut être réalisé en un matériau rigide, tel qu'un polyamide 6.6, excepté pour au moins l'une desdites extrémités amont ou aval dont la partie annulaire externe, au contact de la conduite, est réalisée en un matériau souple de préférence en un caoutchouc ou en un vulcanisat thermoplastique (TPV) apte à constituer avec la conduite une étanchéité de qualité renforcée. La souplesse de ce matériau est apte à compenser les variations de géométrie de la conduite telles que des tolérances de réalisation ou des ovalisations.

Selon une autre variante, ce dispositif peut être réalisé en un matériau plastique rigide, tel qu'un polyamide 6.6, excepté pour ledit tronçon intermédiaire qui est réalisé en un matériau souple, tel qu'un caoutchouc ou un vulcanisat thermoplastique (TPV).

On notera que le caoutchouc ou le vulcanisat thermoplastique qui est inclus dans cette structure à deux matériaux (respectivement souple et rigide) du dispositif selon l'invention permet d'autoriser une « respiration » de ce dernier radialement en regard du volume mort annulaire.

On notera que ces deux variantes précitées peuvent être combinées.

Selon une autre caractéristique de l'invention, le ratio des aires [section de passage minimale dudit canal / section transversale de la face radialement interne du conduit au niveau du canal du dispositif] peut avantageusement être compris entre 0,05 et 0,75, et de préférence entre 0,20 et 0,50.

On notera que ces plages de valeurs pour ce ratio surfacique permettent de procurer une atténuation acoustique satisfaisante au sein dudit circuit dans une plage de fréquences sonores située autour de 1500 Hz environ, via le rétrécissement significatif de la section de passage qu'elles représentent, cette atténuation étant en outre optimale lorsque ledit dispositif est installé directement contre le compresseur du circuit de climatisation (i.e. directement à l'aspiration ou entrée de ce compresseur).

In convient de noter que ledit dispositif présente une structure qui permet de l'insérer à une extrémité de ladite conduite qui est située à proximité immédiate du compresseur, de telle sorte que l'atténuation acoustique s'en trouve améliorée, contrairement aux capacités acoustiques de l'art antérieur que l'on monte usuellement à distance dudit compresseur pour les raisons exposées ci-dessus.

On notera également que ce rétrécissement de la section de passage pour le fluide se réfère à une section de passage dudit canal qui apparaît comme étant minimale sur la longueur axiale totale du dispositif, i.e. dont l'aire est la plus réduite sur cette longueur (il ne s'agit donc pas d'une section de passage moyenne), et à une section transversale de la face radialement interne du conduit au niveau dudit canal.

On notera en outre que ledit canal est délimité par une face radialement interne qui peut présenter une section transversale de géométrie régulière ou non dans la direction axiale (e.g. de type polygonale, épicycloïdale, elliptique ou circulaire).

Avantageusement, la section de passage minimale dudit canal peut présenter une aire comprise entre 4,9 mm² et 79 mm², et la section transversale de la face radialement interne du conduit au niveau dudit canal peut présenter une aire comprise entre 26,4 mm² et 201 mm².

Selon une autre caractéristique de l'invention, cette conduite est telle que le ratio des aires [section de passage minimale dudit canal section transversale interne minimale de ladite paroi de conduite] est avantageusement compris entre 0,05 et 0,60 et, de préférence, entre 0,20 et 0,50.

Un circuit de climatisation selon l'invention pour véhicule automobile est du type comportant :
- des conduites destinées à véhiculer un fluide frigorigène gazeux sous pression entre un compresseur et un évaporateur, et
- un dispositif réducteur de bruit inséré dans au moins l'une de ces conduites dans laquelle est inséré ledit dispositif, cette conduite étant telle que définie ci-dessus en relation avec la présente invention.

Selon une autre caractéristique avantageuse de l'invention, ladite conduite dans laquelle est inséré ledit dispositif est raccordée directement à l'aspiration (i.e. l'entrée) ou au refoulement (i.e. la sortie) dudit compresseur, respectivement dans une ligne basse pression ou dans une ligne haute pression dudit circuit, et ledit dispositif peut être avantageusement monté à l'extrémité de ladite conduite qui débouche sur ladite aspiration ou sur ledit refoulement du compresseur, respectivement dans ladite ligne basse pression ou dans ladite ligne haute pression.

En d'autres termes, on notera que le dispositif de l'invention est utilisable tant dans une ligne basse pression que dans une ligne haute pression d'un tel circuit de climatisation.

On notera à nouveau que ce montage du dispositif de l'invention à proximité immédiate du compresseur permet d'atténuer de manière encore plus satisfaisante le bruit généré par ce dernier à l'intérieur du circuit de climatisation.

Le circuit de climatisation selon l'invention peut fonctionner dans les plages usuelles de température et de pression relatives au fluide frigorigène utilisé, i.e. par exemple à des pressions allant sensiblement de 2 bars à 25 bars pour du « R134a » et allant de plusieurs dizaines de bars à environ 150 bars pour du dioxyde de carbone.

On notera qu'un fluide frigorigène tel que le dioxyde de carbone peut être gazeux à l'aspiration du compresseur dans un tel circuit, alors qu'il peut être supercritique au refoulement de ce compresseur.

D'autres caractéristiques, avantages et détails de la présente invention ressortiront à la lecture de la description suivante d'exemples de réalisation de l'invention, donnés à titre illustratif et non limitatif, ladite description étant réalisée en référence avec les dessins joints, parmi lesquels :
la figure 1 est une vue schématique et en perspective d'un circuit de climatisation de l'état de l'art pour véhicule automobile, montrant notamment deux lignes basse pression et haute pression de fluide frigorigène gazeux ou supercritique,
la figure 2 est une vue en coupe longitudinale d'un dispositif réducteur de bruit inséré dans une conduite pour circuit de climatisation selon le premier mode de réalisation de l'invention,

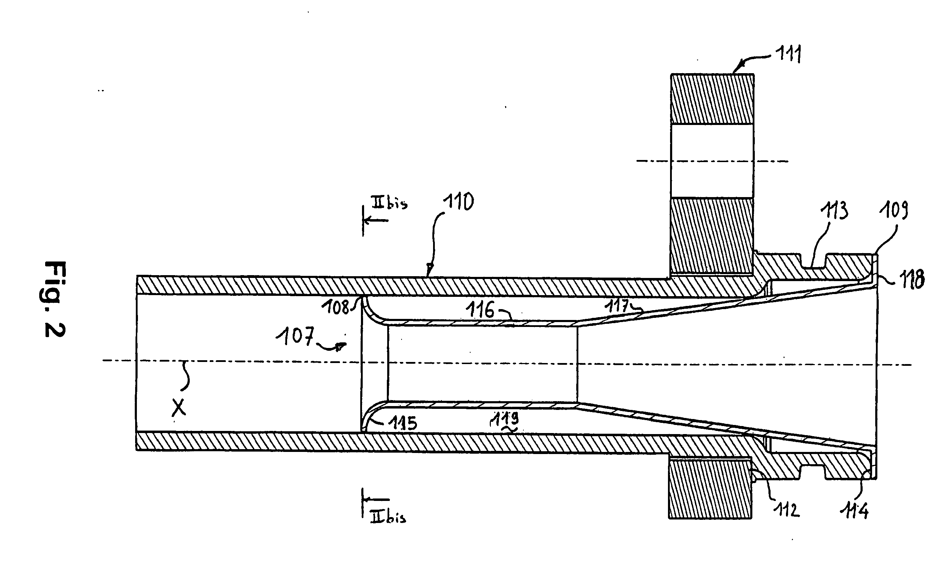

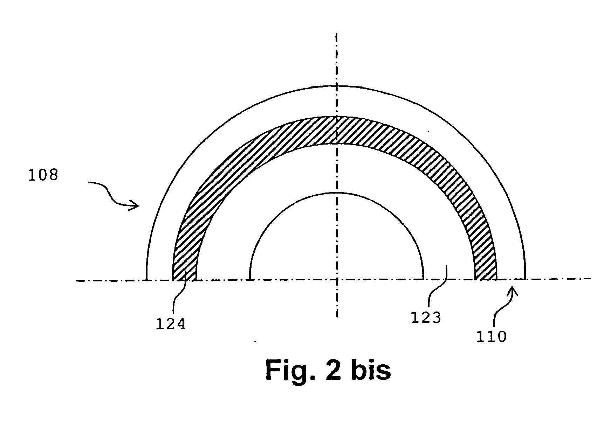

la figure 2bis est une vue en section transversale de l'extrémité amont d'un dispositif réducteur de bruit selon ce premier mode inséré dans cette conduite, suivant le plan de coupe IIbis-IIbis de la figure 2,

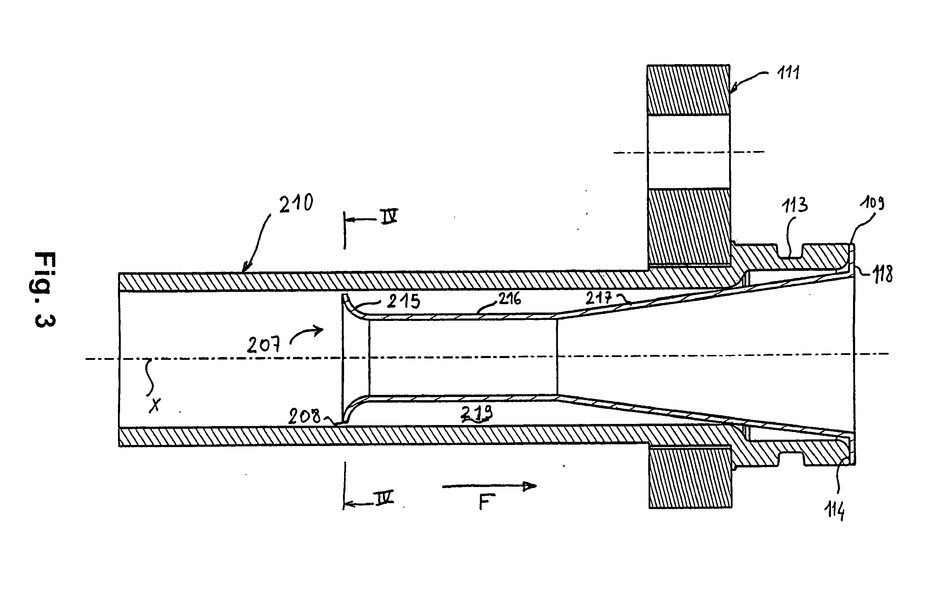

la figure 3 est une vue en coupe longitudinale d'un dispositif réducteur de bruit selon le second mode de l'invention,

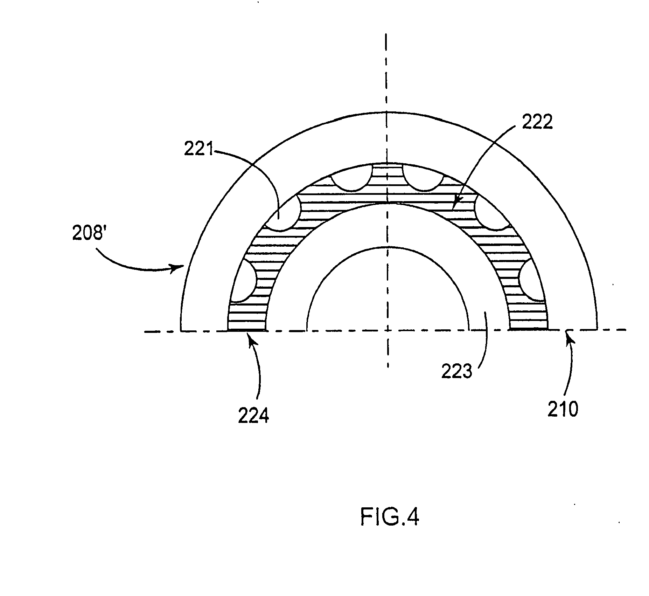

la figure 4 est une vue en section transversale de l'extrémité amont d'un dispositif réducteur de bruit inséré dans cette conduite selon ce second mode de l'invention, suivant le plan IV-IV de la figure 3, et

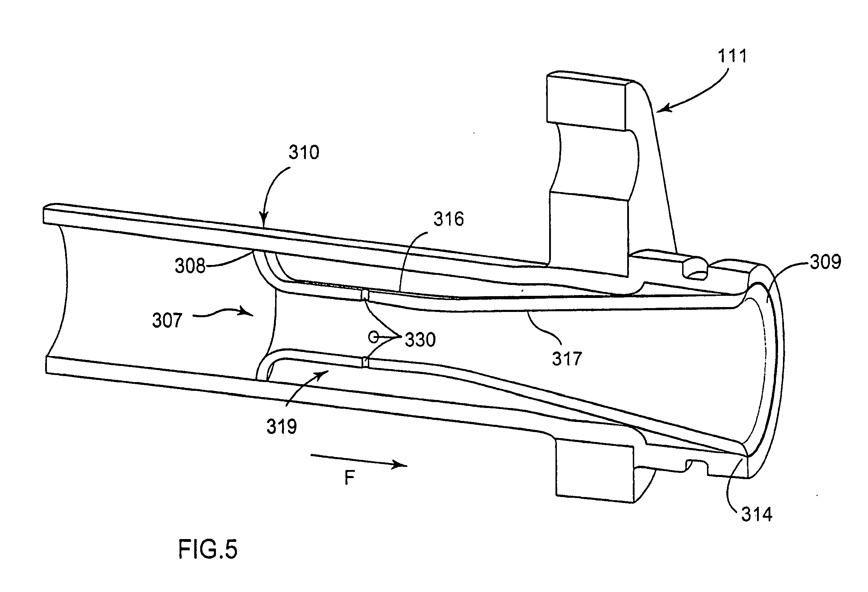

la figure 5 est une vue en perspective et en coupe longitudinale montrant l'intérieur d'un dispositif perforé selon un exemple de réalisation de l'invention pouvant être conforme à l'un ou à l'autre de ces deux modes.

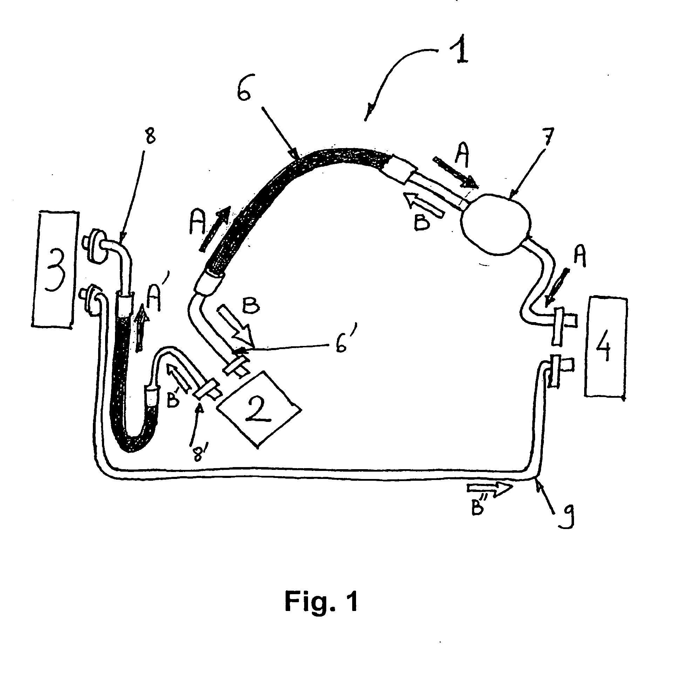

Le circuit de climatisation 1 illustré à la figure 1 est de manière connue un circuit fermé qui comprend plusieurs éléments répartis à l'intérieur du compartiment moteur du véhicule, notamment un compresseur 2, un condenseur ou refroidisseur 3, un réservoir déshydratant (non visible), un système de détente (non visible) et un évaporateur 4, et dans lequel circule un fluide frigorigène gazeux ou supercritique et sous pression (tel que du « R134a » ou du dioxyde de carbone, à titre non limitatif) ou bien un fluide liquide. Tous ces éléments sont reliés entre eux par des lignes rigides ou flexibles constitués par des portions tubulaires rigides et/ou souples, qui présentent en chacune de leurs extrémités des moyens de raccordement étanches.

Plus précisément, le circuit 1 comporte :
- une ligne basse pression 6, 6' destinée à véhiculer le fluide frigorigène gazeux entre le compresseur 2 et l'évaporateur 4, et un dispositif réducteur de bruit 7 de type capacité acoustique qui est monté en ligne dans une conduite 6 relativement éloignée du compresseur 2 (dans cette ligne 6, 6', les flèches A indiquent le sens de propagation du bruit généré par le compresseur 2 et les flèches B le sens de circulation du fluide qui est inverse du précédent) ;
- une ligne haute pression 8, 8' pour le fluide frigorigène gazeux ou supercritique qui est raccordée au compresseur 2 et au condenseur 3 (dans cette ligne 8, 8', la flèche A' indique le sens de propagation du bruit généré par le compresseur 2 et la flèche B' le sens de circulation du fluide qui est le même que le précédent) ; et
- une ligne haute pression liquide 9 qui est raccordée au condenseur 3 et à l'évaporateur 4 (dans cette ligne 9, la flèche B" indique le sens de circulation dudit fluide liquide).

Comme cela est visible à la figure 1, la capacité acoustique 7 de la ligne basse pression 6, 6' comporte, dans cet exemple de réalisation, deux ouvertures respectivement d'entrée et de sortie pour le fluide frigorigène, et l'élargissement de la section de passage pour le fluide qui la caractérise permet d'atténuer les ondes sonores générées par le compresseur 2 et se propageant le long de cette ligne 6, 6'. En contrepartie, cette capacité 7 présente l'inconvénient connu de générer des pertes de charge lors de sa traversée par le fluide.

Le dispositif réducteur de bruit 107 selon le premier mode de réalisation de l'invention qui est illustré à la figure 2 forme un canal axial pour l'écoulement du fluide frigorigène (voir flèche F pour le sens de l'écoulement de ce fluide) qui est délimité axialement par deux extrémités amont 108 (i.e. d'entrée du fluide) et aval 109 (i.e. de sortie du fluide), et il est avantageusement monté, en référence à la figure 1 :
- à une extrémité de la conduite 6' de la ligne basse pression 6, 6' qui est raccordée au compresseur 2, de sorte que le dispositif 107 soit monté directement à l'aspiration de ce compresseur 2, ou bien
- à une extrémité de la conduite 8' de la ligne haute pression 8, 8' qui est raccordée au compresseur 2, de sorte que le dispositif 107 soit monté directement sur le refoulement de ce compresseur 2.

Le dispositif 107 de la figure 2 est inséré coaxialement et radialement à l'intérieur d'une conduite 110 d'axe X sensiblement tubulaire qui est équipée d'une bride transversale 111 de fixation à un organe du circuit de climatisation 1, tel que ce compresseur 2, par l'intermédiaire d'un renflement circonférentiel 112 contre lequel est montée en appui la bride 111. Ce renflement 112 se prolonge axialement vers l'extrémité aval de la conduite 110 par une gorge circonférentielle de raccordement 113 se terminant par une embase sensiblement radiale d'extrémité 114 de la conduite 110.

Ce dispositif 107 présente, dans cet exemple de réalisation:
- un tronçon amont convergent 115 sensiblement en forme d'hyperboloïde de révolution (i.e. avec une face radialement externe concave) dont l'extrémité amont 108 de forme circulaire est montée au contact de la face interne cylindrique de la paroi de la conduite 110,
- un tronçon intermédiaire cylindrique 116 agencé de manière coaxiale à la conduite 110, et
- un tronçon aval 117 sensiblement tronconique qui diverge à partir du tronçon 116 et qui se termine par une collerette radiale 118 qui est montée de manière étanche contre l'embase d'extrémité 114 de l'extrémité aval de la conduite 110 et qui forme l'extrémité aval 109 du dispositif 107.

Comme visible à la figure 2, le dispositif 107 inséré dans la conduite 110 définit avec celle-ci un volume mort annulaire 119 qui est fermé par les extrémités amont 108 et aval 109 du dispositif 107, montées au contact de la conduite 110, et auquel n'a donc pas accès le fluide frigorigène.

L'ensemble du dispositif 107 peut être entièrement réalisé en un matériau rigide tel que du métal ou en un matériau plastique rigide (e.g. un polyamide 6.6) ou, en variante, en un tel matériau rigide sauf pour le tronçon intermédiaire 116 qui peut être avantageusement réalisé en un caoutchouc de dureté Shore A voisine de 60, ou en un TPV.

Selon une autre variante, au moins l'une des deux extrémités 108 ou 109, en l'occurrence l'extrémité amont 108 comme visible à la figure 2bis, peut être constituée d'un anneau interne rigide 123 autour duquel est rapporté un anneau externe souple 124 qui est de préférence en caoutchouc ou vulcanisat thermoplastique (TPV) et qui est au contact de la conduite 110.

Le dispositif réducteur de bruit 207 illustré à la figure 3 se différencie essentiellement de celui de la figure 2, en ce que l'espace interne à la conduite 110 qui est situé en amont de l'extrémité amont 108 du dispositif 107 peut communiquer avec ce volume mort annulaire. Cette extrémité circulaire 208 forme avec la canalisation une zone annulaire continue 221 pour l'admission du fluide dans le volume mort annulaire 219 compris, d'une part, entre le tronçon amont convergent 215, le tronçon intermédiaire cylindrique 216 et le tronçon aval divergent 217 et, d'autre part, la paroi de la conduite 210 (monobloc dans cet exemple de réalisation).

En variante et comme illustré à la figure 4, l'espace interne à la conduite 110 qui est situé en amont de l'extrémité amont 208' du dispositif 107 peut communiquer avec ce volume mort annulaire, par une pluralité de zones d'admission 221 pour le fluide ménagées de façon discontinue de part et d'autre de protubérances radiales 222 de l'extrémité amont 208' appuyant contre la conduite 110. Cette extrémité amont 208' peut alors être sensiblement en forme de roue dentée dont les dents sont formées par ces protubérances 222, et elle est par exemple constituée d'un anneau interne rigide 223 (e.g. en polyamide 6.6), autour duquel est rapporté un anneau externe souple 224 qui forme les zones d'admission 221 entre les protubérances 222 et qui est de préférence en caoutchouc ou vulcanisat thermoplastique (TPV).

Quant au reste du dispositif 107, il peut être entièrement réalisé en un matériau plastique rigide (e.g. un polyamide 6.6) ou, en variante, en un tel matériau rigide sauf pour le tronçon intermédiaire 116 qui peut être avantageusement réalisé en un caoutchouc de dureté Shore A voisine de 60, ou en un TPV.

Le dispositif réducteur de bruit 307 illustré à la figure 5 se différencie essentiellement des dispositifs 107 et 207 des figures 2 et 3, en ce qu'il présente en outre une série de perforations 330 (circulaires dans ce mode de réalisation et par exemple au nombre de six) régulièrement espacées sur une ligne circonférentielle sensiblement médiane du tronçon intermédiaire cylindrique 316. Ces perforations 330 génèrent un écoulement de fluide frigorigène vers le volume mort annulaire 319 formé entre le dispositif 307 et la conduite 310, du fait que l'extrémité aval 309 du tronçon aval divergent 317 est toujours montée de manière étanche contre la conduite 310, sous l'embase d'extrémité 314 de celle-ci. Et cet écoulement de fluide dans ce volume mort 319 se traduit par un phénomène de résonance de type résonateur de Helmholtz qui permet d'atténuer de manière satisfaisante les bruits émis à des hautes fréquences, typiquement autour de 1500 Hz.

On notera que ce dispositif 307 à perforations 330 de la figure 5 peut avoir son extrémité amont 308 aussi bien montée continûment au contact de la paroi de la conduite 310 (à l'instar de la figure 2), que formant une zone d'admission de fluide annulaire (à l'instar de la figure 3) ou bien des zones d'admission de fluide discontinues (à l'instar de la figure 4).

On notera par ailleurs d'une manière générale que, selon le jeu radial moyen ménagé entre l'extrémité amont 208, 308 du dispositif 207, 307 (d'épaisseur par exemple égale à 0,1 mm environ s'il est en métal ou de 1 mm environ s'il est en matière plastique rigide tel que du PA 6.6) et la paroi en regard de la conduite 210, 310, ce dispositif peut être considéré :
- soit comme un résonateur de type un quart d'onde, pour un jeu radial relativement important, par exemple d'environ 0,55 mm (ou plus),
- soit comme un résonateur de type Helmholtz, pour un jeu radial plus réduit, par exemple inférieur à 0,55 mm.

On notera en outre que le dispositif selon l'invention pourrait être monté ailleurs qu'aux extrémités de la conduite, en un emplacement quelconque de celle-ci pouvant être par exemple situé à la jonction des parties souple et rigide de cette conduite.

## Revendications

1. Conduite (110, 210, 310) pour fluide frigorigène gazeux ou supercritique et sous pression d'un circuit de climatisation (1) pour véhicule automobile, la conduite étant pourvue dans son espace radialement interne d'un dispositif réducteur de bruit (107, 207, 307) monté au contact de cette conduite, ce dispositif définissant un canal ou plusieurs canaux sensiblement parallèles de passage du fluide dans la direction de l'axe (X) de la conduite et présentant une extrémité amont (108, 208, 308) convergeant vers un tronçon intermédiaire (116, 216, 316) sensiblement cylindrique ou prismatique du dispositif, lequel tronçon intermédiaire est relié à une extrémité aval (109, 309) de ce dispositif par un tronçon aval divergent (117, 217), **caractérisé en ce que** ce dispositif délimite avec la conduite, axialement entre ces extrémités, au moins un volume mort annulaire (119, 219, 319) qui ne communique pas avec le ou chaque canal par l'une au moins desdites extrémités amont et aval.

2. Conduite (110, 210, 310) selon la revendication 1, **caractérisé en ce que** le dispositif (107, 207, 307) est monté de manière étanche contre la conduite (110, 210, 310) au moins en ladite extrémité aval ou amont (109, 309), qui est de préférence formée d'une collerette (118) prolongeant dans la direction radiale ledit tronçon aval (117, 217) ou bien constituant ladite extrémité amont, selon le cas, en étant destinée à appuyer contre un renflement d'extrémité (114) de la conduite.

3. Conduite (110) selon la revendication 2, **caractérisé en ce que** l'autre extrémité amont ou aval (108) du dispositif (107) est également montée de manière étanche contre la conduite (110), de telle sorte que ledit volume mort annulaire (119) s'étende de ladite extrémité amont à ladite extrémité aval (109) en ne communiquant pas avec ledit canal.

4. Conduite (210) selon la revendication 2, **caractérisé en ce qu'**une seule desdites extrémités ou extrémité communicante (208, 208') du dispositif (207) forme avec la conduite (210) au moins une zone d'admission (221) pour le fluide qui est localisée radialement entre cette extrémité communicante et la paroi tubulaire de la conduite et qui communique avec ledit volume mort annulaire (219).

5. Conduite (210) selon la revendication 4, **caractérisé en ce que** ladite zone d'admission pour le fluide est constituée d'un espace périphérique continu qui est ménagé entre ladite extrémité communicante (208) et la paroi en regard de la conduite, et qui présente par exemple une géométrie annulaire.

6. Conduite (210) selon la revendication 4, **caractérisé en ce que** ladite extrémité communicante (208') forme avec la conduite (210) une pluralité de zones d'admission (221) pour le fluide, qui sont ménagées de façon discontinue de part et d'autre de protubérances radiales (222) de l'extrémité communicante qui appuient contre la conduite, cette extrémité communicante étant sensiblement en forme de roue dentée dont les dents sont formées par ces protubérances.

7. Conduite (210) selon la revendication 6, **caractérisé en ce que** ladite extrémité communicante (208') est constituée d'un anneau interne rigide (223), de préférence en un matériau thermoplastique tel qu'un polyamide 6.6, autour duquel est rapporté un anneau externe souple (224) qui forme lesdites zones d'admission (221) entre lesdites protubérances (222) et qui est de préférence en caoutchouc ou vulcanisat thermoplastique (TPV).

8. Conduite (310) selon une des revendications précédentes, **caractérisé en ce que** le dispositif (307) présente en outre, formée de manière traversante sur la paroi dudit tronçon intermédiaire (316) et/ou dudit tronçon aval divergent (317), au moins une série de perforations (330) qui sont agencées sur le pourtour de ce tronçon et qui sont destinées à communiquer avec ledit volume mort annulaire (319), de préférence sur une circonférence sensiblement médiane du tronçon intermédiaire, de telle sorte que ce dispositif forme un résonateur de Helmholtz atténuant en particulier des hautes fréquences, par exemple proches de 1500 Hz.

9. Conduite (110, 210, 310) selon une des revendications précédentes, **caractérisé en ce que** ladite extrémité amont (108, 208, 308) du dispositif (107, 207, 307) converge vers ledit tronçon intermédiaire (116, 216, 316) via un court tronçon amont convergent (115, 215) qui est convexe sur sa face radialement interne.

10. Conduite (110, 210, 310) selon une des revendications précédentes, **caractérisé en ce que** ledit tronçon aval divergent (117, 217, 317) du dispositif (107, 207, 307) présente une géométrie sensiblement tronconique et une longueur axiale qui est de préférence supérieure à celle dudit tronçon intermédiaire (116, 216, 316).

11. Conduite (110, 210, 310) selon une des revendications précédentes, **caractérisé en ce que** le dispositif (107, 207, 307) est entièrement réalisé :
- en un matériau plastique rigide, tel qu'un polyamide 6.6, ou
- en un matériau plastique rigide, tel qu'un polyamide 6.6, excepté pour ledit tronçon intermédiaire (116, 216, 316) qui est réalisé en un matériau souple, tel qu'un caoutchouc ou un vulcanisat thermoplastique (TPV),
ce dispositif présentant de préférence une épaisseur qui est inférieure à celle de la paroi de la conduite et qui est par exemple de l'ordre de 1 mm.

12. Conduite (110, 210, 310) selon une des revendications précédentes, **caractérisé en ce que** le ratio des aires entre la section de passage minimale dudit canal et la section transversale de la face radialement interne du conduit au niveau du canal du dispositif (107, 207, 307) est compris entre 0,05 et 0,75, et de préférence entre 0,20 et 0,50.

13. Conduite (110, 210, 310) selon la revendication 12, **caractérisé en ce que** ladite section de passage minimale dudit canal présente une aire comprise entre 4,9 mm² et 79 mm², et **en ce que** ladite section transversale de la face radialement interne du conduit au niveau dudit canal présente une aire comprise entre 26,4 mm² et 201 mm², le ratio des aires [section de passage minimale dudit canal / section transversale interne minimale de la paroi de la conduite] étant de préférence compris entre 0,05 et 0,60, et de préférence entre 0,20 et 0,50.

14. Circuit de climatisation (1) pour véhicule automobile, du type comportant des conduites (6, 6') destinées à véhiculer un fluide frigorigène gazeux sous pression entre un compresseur (2) et un évaporateur (4), et un dispositif réducteur de bruit (107, 207, 307) inséré dans au moins l'une desdites conduites (6'), **caractérisé en ce que** ladite conduite dans laquelle est inséré ce dispositif est telle que définie à l'une des revendications précédentes.

15. Circuit de climatisation (1) selon la revendication 14, **caractérisé en ce que** ladite conduite (6') dans laquelle est inséré ledit dispositif (107, 207, 307) est raccordée directement à l'aspiration ou au refoulement dudit compresseur (2), respectivement dans une ligne basse pression (6, 6') ou dans une ligne haute pression (8, 8') dudit circuit, ledit dispositif étant de préférence monté à l'extrémité de ladite conduite (6') qui débouche sur ladite aspiration ou sur ledit refoulement du compresseur (2), respectivement dans ladite ligne basse pression (6, 6') ou dans ladite ligne haute pression (8, 8').

## Claims

1. Pipe (110, 210, 310) for a pressurised gaseous or supercritical refrigerant fluid of an air-conditioning circuit (1) for a motor vehicle, the pipe being provided in its radially inner space with a noise reduction device (107, 207, 307) mounted in contact with this pipe, this device defining a channel or a plurality of substantially parallel channels for conveying fluid in the direction of the axis (X) of the pipe and having an upstream end (108, 208, 308) converging towards a substantially cylindrical or prismatic intermediate section (116, 216, 316) of the device, this intermediate section being connected to a downstream end (109, 309) of this device by a divergent downstream section (117, 217), **characterised in that** this device defines with the pipe, axially between these ends, at least one annular dead space (119, 219, 319) which does not communicate with the or each channel through at least one of the said upstream and downstream ends.

2. Pipe (110, 210, 310) according to claim 1, **characterised in that** the device (107, 207, 307) is mounted in leaktight manner against the pipe (110, 210, 310) at least at the downstream or upstream end thereof (109, 309), which is preferably formed by a flange (118) extending said downstream section (117, 217) in the radial direction or constituting said upstream end, as the case may be, being intended to bear against a flared end (114) of the pipe.

3. Pipe (110) according to claim 2, **characterised in that** the other upstream or downstream end (108) of the device (107) is also mounted in leaktight manner against the pipe (110), such that said annular dead space (119) extends from said upstream end to said downstream end (109), without communicating with said channel.

4. Pipe (210) according to claim 2, **characterised in that** only one of the said ends or communicating end (208, 208') of the device (207) forms with the pipe (210) at least one intake zone (221) for the fluid, which is located radially between this communicating end and the tubular wall of the pipe and which communicates with said annular dead space (219).

5. Pipe (210) according to claim 4, **characterised in that** the said intake zone for the fluid is made up of a continuous peripheral space which is defined between said communicating end (208) and the facing wall of the pipe, and which has an annular geometry, for example.

6. Pipe (210) according to claim 4, **characterised in that** the communicating end (208') forms, with the pipe (210), a plurality of intake zones (221) for the fluid, which are provided discontinuously on either side of radial protrusions (222) of the communicating end which bear on the pipe, this communicating end being substantially in the shape of a toothed wheel the teeth of which are formed by these protrusions.

7. Pipe (210) according to claim 6, **characterised in that** the communicating end (208') is made up of a rigid inner ring (223), preferably of a thermoplastic material such as a polyamide 6.6, around which is fitted a flexible outer ring (224) which forms the said intake zones (221) between the said protrusions (222) and which is preferably made of rubber or thermoplastic vulcanizate (TPV).

8. Pipe (310) according to one of the preceding claims, **characterised in that** the device (307) further comprises, formed in a transverse manner on the wall of said intermediate section (316) and/or of said divergent downstream section (317), at least one series of perforations (330) which are arranged around the periphery of this section and are intended to communicate with said annular dead space (319), preferably over a substantially median circumference of the intermediate section, such that this device forms a Helmholtz resonator which attenuates high frequencies in particular, for example frequencies in the vicinity of 1500 Hz.

9. Pipe (110, 210, 310) according to one of the preceding claims, **characterised in that** the upstream end (108, 208, 308) of the device (107, 207, 307) converges towards said intermediate section (116, 216, 316) via a short convergent upstream section (115, 215) which is convex on its radially inner surface.

10. Pipe (110, 210, 310) according to one of the preceding claims, **characterised in that** the divergent downstream section (117, 217, 317) of the device (107, 207, 307) has a substantially frustum-shaped geometry and an axial length which is preferably greater than that of the intermediate section (116, 216, 316).

11. Pipe (110, 210, 310) according to one of the preceding claims, **characterised in that** the device (107, 207, 307) is entirely made from:
- a rigid plastic material such as a polyamide 6.6, or
- a rigid plastic material such as a polyamide 6.6, except for the intermediate section (116, 216, 316) which is made from a flexible material such as a rubber or a thermoplastic vulcanizate (TPV),
this device preferably having a thickness which is less than that of the wall of the hose and is of the order of 1 mm, for example.

12. Pipe (110, 210, 310) according to one of the preceding claims, **characterised in that** the ratio of the areas between the minimum cross-section of passage of the channel and the cross-section of the radially inner surface of the pipe level with the channel of the device (107, 207, 307) is between 0.05 and 0.75 and preferably between 0.20 and 0.50.

13. Pipe (110, 210, 310) according to claim 12, **characterised in that** the minimum cross-section of passage of the channel has an area of between 4.9 mm² and 79 mm², and **in that** the said cross-section of the radially inner surface of the pipe level with the said channel has an area of between 26.4 mm² and 201 mm², the ratio of the areas [minimum cross-section of passage of said channel / minimum internal cross-section of the wall of the hose] preferably being between 0.05 and 0.60 and preferably between 0.20 and 0.50.

14. Air-conditioning circuit (1) for a motor vehicle, of the type comprising pipes (6, 6') intended to convey a pressurised gaseous refrigerant fluid between a compressor (2) and an evaporator (4), and a noise reduction device (107, 207, 307) inserted in at least one of said pipes (6'), **characterised in that** the pipe in which this device is inserted is as defined in one of the preceding claims.

15. Air-conditioning circuit (1) according to claim 14, **characterised in that** the pipe (6') in which the device (107, 207, 307) is inserted is connected directly to the intake or discharge of the compressor (2), in a low pressure line (6, 6') or in a high pressure line (8, 8') of said circuit, respectively, the device preferably being mounted at the end of the said pipe (6') which opens into said intake or into said discharge of the compressor (2), or into said low pressure line (6, 6') or into said high pressure line (8, 8'), respectively.

## Patentansprüche

1. Rohrleitung (110, 210, 310) für ein unter Druck stehendes, gasförmiges oder superkritisches Kältemittelfluid eines Klimaanlagenkreislaufs (1) für ein Kraftfahrzeug, wobei die Rohrleitung in ihrem in Radialrichtung inneren Raum mit einer Geräuschunterdrückungsvorrichtung (107, 207, 307) versehen ist, welche in Anlagekontakt an der Rohrleitung angebracht ist, wobei diese Vorrichtung eine Passage bzw. mehrere, im Wesentlichen parallele Passagen für den Durchlauf des Fluids in der Richtung der Achse (X) der Rohrleitung begrenzt und ein stromaufwärtiges Ende (108, 208, 308) aufweist, das auf ein im Wesentlichen zylinderoder prismenförmiges Zwischenteilstück (116, 216, 316) der Vorrichtung hin konvergiert, wobei das Zwischenteilstück durch ein divergierendes stromabwärtiges Teilstück (117, 217) mit einem stromabwärtigen Ende (109, 309) der Vorrichtung verbunden ist, **dadurch gekennzeichnet, dass** die Vorrichtung in Axialrichtung zwischen diesen Enden zusammen mit der Rohrleitung mindestens ein ringförmiges Totvolumen (119, 219, 319) begrenzt, das über mindestens eines von dem stromaufwärtigen und dem stromabwärtigen Ende nicht mit der bzw. jeder Passage kommuniziert.

2. Rohrleitung (110, 210, 310) nach Anspruch 1, **dadurch gekennzeichnet, dass** die Vorrichtung (107, 207, 307) zumindest an dem stromabwärtigen oder stromaufwärtigen Ende (109, 309), das bevorzugt von einem Kragen (118) gebildet ist, welcher je nach Fall das stromabwärtige Teilstück (117, 217) in der Radialrichtung verlängert oder auch das stromaufwärtige Ende darstellt, gegen die Rohrleitung (110, 210, 310) dichtend angebracht ist, indem es dazu bestimmt ist, gegen einen Endwulst (114) der Rohrleitung anzuliegen.

3. Rohrleitung (110) nach Anspruch 2, **dadurch gekennzeichnet, dass** das andere, stromaufwärtige oder stromabwärtige Ende (108) der Vorrichtung (107) ebenfalls gegen die Rohrleitung (110) dichtend angebracht ist, so dass sich das ringförmige Totvolumen (119) von dem stromaufwärtigen Ende zu dem stromabwärtigen Ende (109) erstreckt, ohne mit der Passage zu kommunizieren.

4. Rohrleitung (210) nach Anspruch 2, **dadurch gekennzeichnet, dass** ein einzelnes der Enden bzw. ein kommunizierendes Ende (208, 208') der Vorrichtung (207) mit der Rohrleitung (210) mindestens eine Einlasszone (221) für das Fluid bildet, die sich in Radialrichtung zwischen diesem kommunizierenden Ende und der röhrenförmigen Wand der Rohrleitung befindet und mit dem ringförmigen Totvolumen (219) kommuniziert.

5. Rohrleitung (210) nach Anspruch 4, **dadurch gekennzeichnet, dass** die Einlasszone für das Fluid aus einem umfangsmäßig umlaufenden Raum besteht, der zwischen dem kommunizierenden Ende (208) und der der Rohrleitung gegenüberliegenden Wand ausgebildet ist, und der beispielsweise eine Ringgeometrie besitzt.

6. Rohrleitung (210) nach Anspruch 4, **dadurch gekennzeichnet, dass** das kommunizierende Ende (208') mit der Rohrleitung (210) eine Mehrzahl von Einlasszonen (221) für das Fluid bildet, die intermittierend auf jeweils beiden Seiten von radialen, gegen die Rohrleitung anliegenden Vorsprüngen (222) des kommunizierenden Endes ausgebildet sind, wobei das kommunizierende Ende im Wesentlichen die Form eines Zahnrades besitzt, dessen Zähne von diesen Vorsprüngen gebildet sind.

7. Rohrleitung (210) nach Anspruch 6, **dadurch gekennzeichnet, dass** das kommunizierende Ende (208') aus einem starren inneren Ring (223) aus vorzugsweise einem thermoplastischen Material wie etwa einem Polyamid 6.6 besteht, um das herum ein elastischer äußerer Ring (224) aufgesetzt ist, der die Einlasszonen (221) zwischen den Vorsprüngen (222) ausbildet und der bevorzugt aus Gummi oder einem thermoplastischen Vulkanisat (TPV) besteht.

8. Rohrleitung (310) nach einem der vorherigen Ansprüche, **dadurch gekennzeichnet, dass** die Vorrichtung (307) ferner mindestens eine Reihe von Lochungen (330) aufweist, welche so ausgebildet ist, dass die Wand des Zwischenteilstücks (316) und/oder des divergierenden stromabwärtigen Teilstücks (317) davon durchsetzt ist, wobei die Lochungen (330) auf dem Umfang dieses Teilstücks angeordnet sind und dazu bestimmt sind, mit dem ringförmigen Totvolumen (319) zu kommunizieren, bevorzugt auf einem im Wesentlichen medianen Umfang des Zwischenteilstücks, so dass die Vorrichtung einen Helmholtz-Resonator darstellt, der insbesondere hohe Frequenzen von beispielsweise um 1500 Hz abschwächt.

9. Rohrleitung (110, 210, 310) nach einem der vorherigen Ansprüche, **dadurch gekennzeichnet, dass** das stromaufwärtige Ende (108, 208, 308) der Vorrichtung (107, 207, 307) über ein kurzes, konvergierendes stromaufwärtiges Teilstück (115, 215), das auf seiner in Radialrichtung inneren Seite konvex gekrümmt ist, auf das Zwischenteilstück (116, 216, 316) hin konvergiert.

10. Rohrleitung (110, 210, 310) nach einem der vorherigen Ansprüche, **dadurch gekennzeichnet, dass** das divergierende stromabwärtige Teilstück (117, 217, 317) der Vorrichtung (107, 207, 307) eine im Wesentlichen kegelstumpfförmige Geometrie besitzt, sowie eine axiale Länge, die bevorzugt größer als diejenige des Zwischenteilstücks (116, 216, 316) ist.

11. Rohrleitung (110, 210, 310) nach einem der vorherigen Ansprüche, **dadurch gekennzeichnet, dass** die Vorrichtung (107, 207, 307)
- vollständig aus einem starren Plastikmaterial wie etwa einem Polyamid 6.6 oder
- mit Ausnahme des Zwischenteilstücks (116, 216, 316), das aus einem elastischen Material wie etwa einem Gummi oder einem thermoplastischen Vulkanisat (TPV) ausgeführt ist, vollständig aus einem starren Plastikmaterial wie etwa einem Polyamid 6.6
ausgeführt ist,
wobei die Vorrichtung bevorzugt eine Dicke besitzt, die geringer als diejenige der Wand der Rohrleitung ist und beispielsweise in der Größenordnung von 1 mm beträgt.

12. Rohrleitung (110, 210, 310) nach einem der vorherigen Ansprüche, **dadurch gekennzeichnet, dass** das Verhältnis der Flächeninhalte zwischen dem minimalen offenen Querschnitt der Passage und dem Querschnitt der in Radialrichtung inneren Seite der Leitung auf Höhe der Passage der Vorrichtung (107, 207, 307) zwischen 0,05 und 0,75 und bevorzugt zwischen 0,20 und 0,50 beträgt.

13. Rohrleitung (110, 210, 310) nach Anspruch 12, **dadurch gekennzeichnet, dass** der minimale offene Querschnitt der Passage einen zwischen 4,9 mm² und 79 mm² liegenden Flächeninhalt besitzt, sowie **dadurch**, dass der Querschnitt der in Radialrichtung inneren Seite der Leitung auf Höhe der Passage einen zwischen 26,4 mm² und 201 mm² liegenden Flächeninhalt besitzt, wobei das Verhältnis der Flächeninhalte [minimaler offener Querschnitt der Passage / minimaler Innenquerschnitt der Wand der Rohrleitung] bevorzugt zwischen 0,05 und 0,60 und weiter bevorzugt zwischen 0,20 und 0,50 liegt.

14. Klimaanlagenkreislauf (1) für ein Kraftfährzeug, von dem Typ mit Rohrleitungen (6, 6'), die dazu bestimmt sind, ein unter Druck stehendes, gasförmiges Kältemittelfluid zwischen einem Verdichter (2) und einem Verdampfer (4) zu transportieren, und einer in mindestens einer der Rohrleitungen (6') installierten Geräuschunterdrückungsvorrichtung (107, 207, 307), **dadurch gekennzeichnet, dass** die Rohrleitung, in der die Vorrichtung installiert ist, eine Rohrleitung gemäß der Definition in einem der vorherigen Ansprüche ist.

15. Klimaanlagenkreislauf (1) nach Anspruch 14, **dadurch gekennzeichnet, dass** die Rohrleitung (6'), in der die Vorrichtung (107, 207, 307) installiert ist, in einer Niederdruckleitung (6, 6') oder einer Hochdruckleitung (8, 8') des Kreislaufes unmittelbar an die Ansaugseite bzw. an die Hochdruckseite des Verdichters (2) angeschlossen ist, wobei die Vorrichtung bevorzugt an demjenigen Ende der Rohrleitung (6') angebracht ist, das sich in der Niederdruckleitung (6, 6') oder in der Hochdruckleitung (8, 8') zur Ansaugseite bzw. zur Hochdruckseite des Verdichters (2) hin öffnet.
